# EUROPÄISCHE PATENTSCHRIFT

(11) **EP 0 335 872 B1**
(45) Veröffentlichungstag und Bekanntmachung des Hinweises auf die Patenterteilung: **08.09.1993**
(21) Anmeldenummer: 87907304.7
(22) Anmeldetag: 24.11.1987
(51) Int. Cl.: H04N 7/133

(54) **VERFAHREN UND SCHALTUNGSANORDNUNG ZUR REDUKTION DER DATENRATE DIGITALISIERTER BILDER**
PROCESS AND CIRCUITRY FOR REDUCING THE DATA RATE OF DIGITAL PICTURES
PROCEDE ET CIRCUITS DE REDUCTION DU TAUX DE DONNEES D'IMAGES NUMERISEES

(30) Priorität: 12.12.1986 DE 3642492
(43) Veröffentlichungstag der Anmeldung: 11.10.1989
(73) Patentinhaber: ROBERT BOSCH GMBH, 70442 Stuttgart (DE)
(72) Erfinder: AMOR, Hamed, D-3200 Hildesheim (DE); LÜKE, Hans, Dieter, D-5100 Aachen (DE)
(86) Internationale Anmeldenummer: DE8700509
(87) Internationale Veröffentlichungsnummer: WO8804508

(56) Entgegenhaltungen:
- EP-A- 0 201 679
- EP-A- 0 239 076
- DE-A- 3 124 550
- US-A- 4 581 638
- Frequenz, Band 40, Nr. 8, August 1986, (Berlin, DE), Von Achim v. Brandt: "Teilbandcodierung von Bewegtbild-Sequenzen mit 2 Mbit/s", Seiten 190-197,siehe seite 190, linke spalte, Zeile 1 - Seite 191, like Spalte, Zeile 13; Figuren 9,10
- IEEE International Conference on Communications, 10. - 14. Juni 1979, Boston, Band 3, IEEE (New York, US), R. Lippmann: "Techniques of DPCM picture coding for RPV TV", Seiten 52.4.1 - 52.4.5, siehe Zusammenfassung

## Beschreibung

Die Erfindung betrifft ein Verfahren zur Reduktion der Datenrate digitalisierter Bilder nach dem Oberbegriff des Anspruchs 1.

Die Verarbeitung und Übertragung digitalisierter Bilder - nachfolgend wird beispielhaft von Fernsehbildern ausgegangen, wobei aber auch Bildtelefon, Bilder für Videokonferenzen usw. eingeschlossen sind - bietet gegenüber analogen Verfahren einige Vorteile. So lassen sich mehrere unterschiedliche Signale bei der gemeinsamen Verarbeitung und Übertragung besser zusammenfügen und trennen, Störungen leichter beseitigen und die Signale auch auf einer längeren Übertragungsstrecke ohne Qualitätseinbuße aufbereiten und zwischenverstärken.

Diesen Vorteilen steht als Nachteil die gegenüber analogen Verfahren erheblich höhere Übertragungskapazität gegenüber, worunter unter anderem eine hohe Bandbreite, Bitrate und Verarbeitungsgeschwindigkeit verstanden wird. Die verfügbare Übertragungskapazität, seien es freie Frequenzbereiche bei drahtloser Übertragung oder freie Leitungen des Fernmeldenetzes bei drahtgebundender Übertragung, ist jedoch begrenzt und würde die Zahl der Übertragungskanäle für digitalisierte Fernsehbilder stark einschränken und die Benutzer kostenmäßig stark belasten.

Anwendungsbeispiele wie Bildtelefone oder Videokonferenzen verlangen dagegen ein umfangreiches Netz an Übertragungskanälen und niedrige Betriebskosten, damit genügend Teilnehmer die Anschaffung als zweckmäßig ansehen und den Aufbau eines derartigen Netzes rechtfertigen.

Um diese Randbedingungen erfüllen zu können, sind Verfahren zur Datenreduktion entwickelt worden, bei denen der Datenumfang in Abhängigkeit der lokalen Bildstatistik gesteuert wird. Da der mittlere Datenumfang kleiner als der zur Darstellung detailreicher Strukturen maximal benötigte ist, wird so eine Datenreduktion erzielt.

Bei einem bekannten Verfahren dieser Art, wie es in dem Forschungsbericht "Kombinierte Quellen- und Kanalkodierung in adaptiven Transformations-Kodierungssystemen", Fortschrittsberichte VDI, Nr. 52, 1986, Seiten 74 - 117 beschrieben ist, werden die Bilddaten digitalisierter Fernsehbilder zunächst blockweise in einer Transformationsschaltung transformiert, anschließend in einem Koder kodiert und schließlich vor einer seriellen Ausgabe in einem Pufferspeicher zwischengespeichert.

Die Kodierung ist nicht bei jedem Bilddatenblock gleich. Vielmehr wird jedem Bilddatenblock aus seiner eigenen Bildstatistik ein Klassifikationsfaktor zugewiesen und die Bilddatenblöcke werden dann entsprechend dieser Zuweisung unterschiedlich kodiert. Die Kodierung ist dabei so bemessen, daß für das Gesamtbild ein Umfang an Bilddaten erhalten wird, der unter Zwischenspeicherung im Pufferspeicher zur Ausgabe einer Datenrate führt, die unterhalb eines vorgegebenen Grenzwertes liegt.

Dieses Verfahren arbeitet solange einwandfrei, wie Fernsehbilder von Vorlagen mittleren Detailreichtums übertragen werden sollen. Bei detailreichen Vorlagen dagegen droht ein Überlaufen des Pufferspeichers, was zu einschneidenden Störungen führen würde. Um dies zu verhindern, wird beim bekannten Verfahren eine Regelgröße aus dem Umfang der zwischengespeicherten Daten abgeleitet und dem Kodierer zugeführt. Dieser setzt daraufhin die Quantisierungsauflösung der gerade kodierten Bilddaten blöcke herab, so daß der in den Pufferspeicher hineinfließende Datenstrom kleiner wird als der ausgegebene. Dadurch wird ein Überlaufen verhindert.

Allerdings wäre dieser Vorgang durch eine plötzliche Abnahme der Ortsauflösung in einem oder mehreren Bilddatenblöcken störend sichtbar, die auf Bilddatenblöcke hoher Auflösung folgen. Diese Erscheinung tritt auch dann auf, wenn das Gesamtbild im weiteren Verlauf Bereiche detailarmer Strukturen aufweist, die ohnehin zu einer Verringerung des Datenstroms führen. Auch in diesem Fall würde dann bei dem bekannten Verfahren eine Verschlechterung der Bildauflösung eintreten.

Aus der EP-A1- 0 201 679 ist ein Verfahren zur Bilddatenreduktion für digitale Fernsehsignale bekannt. Hierzu werden die Bilddaten zuerst transformiert. Nach der Transformation wird ein Bilddifferenzsignal gebildet und quantisiert. Das quantisierte Signal wird nun mit dem ursprünglichen Signal wieder aufbereitet, gespeichert und steht dann beim nächsten Signal zur Bildung der Bilddifferenz zur Verfügung. Die Bilddatenreduktion erfolgt daher dadurch, daß nicht die Bilder selbst, sondern Bilddifferenzen übertragen werden. Besteht die Gefahr des Überlaufs des Puffers, so wird auf den Quantisierer bzw. auf den Codierer zurückgegriffen, um durch eine Änderung der Quantisierungsschritte bzw. durch Codiermaßnahmen zu erreichen, daß der Datenfluß reduziert wird, so daß ein Überlauf des Puffers nicht zu befürchten ist. Die US-A 4 581 638 befaßt sich mit einer Methode zur Codierung von zweidimensionalen Datenfolgen. Die Bildsignale werden codiert und anschließend die Energiedichte der Daten gemessen, um diese in einen Zahlenwert umzuwandeln, der ein Maß für die Energiedichte der Daten ist. Vom Coder abgegebene Signale werden nunmehr simultan von mehreren Quantisierern quantisiert und die Quantisierungsergebnisse mit den Originalwerten verglichen und die Fehlerrate dargestellt. Die Quantisierung, die einen minimalen Fehler verglichen mit einer vorgegebenen Fehlerschwelle liefert, wird dann übertragen, wobei der Energiedichtewert mit übertragen wird, so daß eine Wiederherstellung des Bildes möglich ist.

Der Erfindung liegt die Aufgabe zugrunde, ein Verfahren zur Reduktion der Datenrate digitalisierter Fernsehbilder so zu verbessern, daß unabhängig vom Detailreichtum der eingegebenen Bilddaten ein subjektiv gleichmäßiger Bildeindruck beim gegenwärtigen Gesamtbild erzielt wird und aus dem Datenumfang der Bilddatenblöcke eine konstante Ausgangsdatenrate erzeugt wird.

Diese Aufgabe wird bei einem Verfahren nach dem Oberbegriff des Anspruchs 1 durch die im kennzeichnenden Teil angegebenen Merkmale gelöst.

Da die Klassen so definiert werden, daß der Übergang von einer zur anderen Klasse aufgrund einer Strukturänderung im Gesamtbild nicht störend bemerkt wird, läßt sich die Zuweisung der Klassen auch für eine subjektiv nicht störende Steuerung des Datenumfangs ausnutzen.

Die Erfindung ermöglicht, Fernsehbilder detailarmer Strukturen mit einer erhöhten Ortsauflösung wiederzugeben. Die Klassen werden nach dem Datenumfang der Bilddatenblöcke so gesteuert, daß über das Gesamtbild betrachtet eine konstante Datenrate erhalten und ausgegeben wird. So lassen sich vorhandene Übertragungskanäle optimal und damit wirtschaftlich ausnutzen.

Besonders vorteilhaft ist eine Weiterbildung des Verfahren, bei der die Regelgröße aus dem Datenumfang aller Bilddatenblöcke, also dem Gesamtbild, gebildet wird. Dadurch wird die Ortsauflösung der Bilddatenblöcke, die sich an detailreich strukturierte Bereiche anschließen, nicht von dem augenblicklichen Datenumfang der zuvor kodierten Bilddatenblöcke beeinträchtigt. Vielmehr lassen sich dann auch sehr kontrastreiche Vorlagen, in denen detailreiche Strukturen mit datailarmen Strukturen abwechseln, mit einem der Ortsauflösung angepaßten Datenumfang kodieren. Dies gelingt, weil der Datenumfang über das Gesamtbild gemittelt wird und so detailarme Bereiche mit ihrem geringen Datenumfang den hohen Datenumfang detailreicher Bereiche ausgleichen.

Weiterbildungen und vorteilhafte Ausführungsformen des erfindungsgemäßen Verfahrens ergeben sich aus den Ansprüche 2 - 8.

Die Erfindung betrifft ferner eine Schaltungsanordnung zur Reduktion der Datenrate digitalisierter Bilder nach dem Oberbegriff des Anspruchs 9.

Diesbezüglich liegt ihr die Aufgabe zugrunde, eine derartige Schaltungsanordnung so zu verbessern, daß unabhängig vom Detailreichtum der zu verarbeitenden Bilddaten ein subjektiv gleichmäßiger Bildeindruck des Gesamtbildes erzielt wird und eine konstante Ausgangsdatenrate erzeugt wird.

Die Erfindung löst die Aufgabe bei einer Schaltungsanordnung nach dem Oberbegriff des Anspruchs 9 mit den im kennzeichnenden Teil angegebenen Merkmalen.

Die von der Pufferspeicheraktivitätseinheit gewonnene Regelgröße stellt ein Maß für den augenblicklichen oder auch den durchschnittlichen Zustand des Pufferspeichers dar. Die Rückführung ist zum Kodierer über den Umweg des Klassifizierers geführt. Auf diese Weise läßt sich die Datenrate durch eine veränderte Zuweisung der Klasse zu den einzelnen Bilddatenblöcken beeinflussen.

Umgekehrt ermöglicht die Schaltungsanordnung bei Fernsehbildern aus detailarmen Vorlagen die Zuweisung einer Klasse höherer Ortsauflösung. Diese Regelung führt so zu einer ausgeglichenen Ausgangsdatenrate und läßt sich so ausgestalten, daß in allen Betriebsfällen, sei es bei detailreichen oder auch detailarmen Vorlagen digitalisierter Fernsehbilder konstanter Datenrate erzeugt werden.

Weiterbildungen und vorteilhafte Ausführungsformen der Schaltungsanordnung sind in den Ansprüchen, 10 - 12 angegeben.

Die Erfindung wird nun anhand eines Ausführungsbeispiels, das in der Zeichnung dargestellt ist, erläutert.

Es zeigen:
- Fig. 1: ein Blockschaltbild einer erfindungsgemäßen Schaltungsanordnung,
- Fig. 2: eine schematische Darstellung des Pufferspeichers aus Fig. 1
- Fig. 3: eine schematische Darstellung des Bildrasters eines Gesamtbildes, und
- Fig. 4: eine graphische Darstellung von Klassen verschiedener Ortsauflösung.

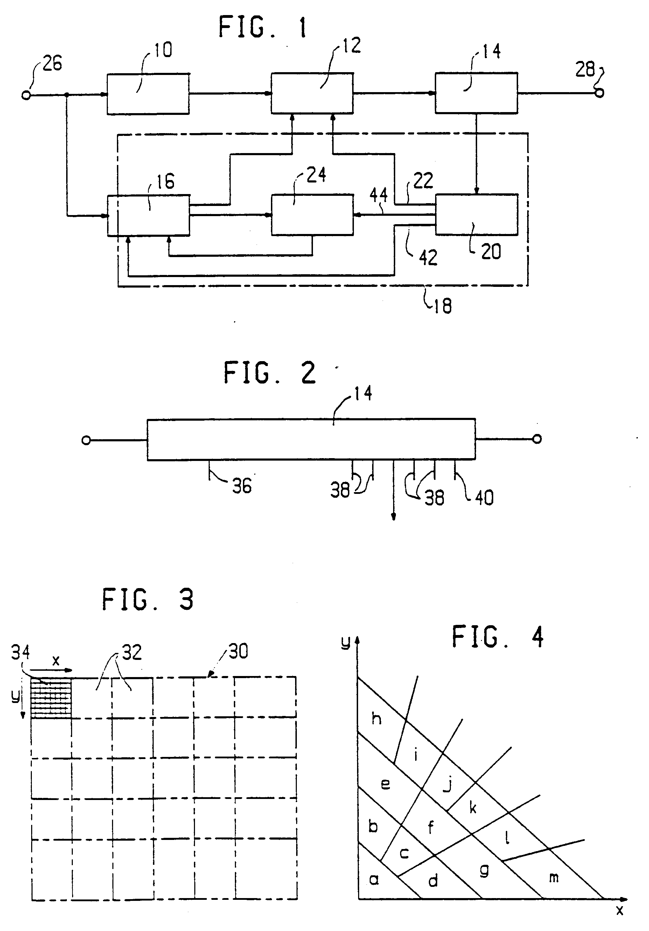

Der in Fig. 1 als Blockschaltbild dargestellten Schaltungsanordnung zur Reduktion der Datenrate digitalisierter Fernsehbilder werden Bilddaten über einen Eingang 26 zugeführt. Die Bilddaten gelangen zunächst in eine Transformationsschaltung 10, in der sie von einem Originalbereich in einen Frequenzbereich überführt werden. Eine solche Transformation ist nach unterschiedlichen Transformationsalgorithmen durchführbar. Als besonders zweckmäßig hat sich jedoch die diskrete Cosinustransformation erwiesen.

Das Fernsehbild wird nicht als ganze Bildmatrix transformiert, sondern in einzelne Bilddatenblöcke zerlegt, die getrennt voneinander transformiert werden. Die Zerlegung in Bilddatenblöcke ist in Fig. 3 veranschaulicht. Diese zeigt einen Ausschnitt 30 eines Gesamtbildes, der in gleichmäßige quadratische Felder 32 aufgeteilt ist. Jedes Feld 32 wiederum enthält eine Anzahl von Bildpunkten 34. Im Ausführungsbeispiel besteht ein Feld 32 aus acht Zeilen in Y-Richtung und acht Spalten in X-Richtung, insgesamt also aus 64 Bildpuntken. Auch andere Formate und Bildpunktanzahlen sind möglich, jedoch erfordert eine höhere Anzahl von Bildpunkten komplexere Algorithmen zu ihrer Transformation. Da für die diskrete Cosinustransformation Algorithmen entwickelt worden sind, die unmittelbar auf rechteckige Bilddatenblöcke anwendbar sind, bietet sich diese Ausgestaltung des Verfahrens zur Durchführung der Transformation besonders an.

Die Ausgangssignale der Transformationsschaltung 10, es handelt sich um Spektralkoeffizienten, werden nun von einem Kodierer 12 weiterverarbeitet. Der Kodierer 12 besteht aus einer Quantisierungsschaltung und der eigentlichen Kodierschaltung. Zunächst wird der Vektor der Spektralkoeffizienten einer Blockquantisierung unterzogen. In der Kodierschaltung werden dann die Transformationsblöcke entsprechend den zur Verfügung stehenden Binärstellen so verarbeitet, daß die Quantisierungsfehler minimal werden. Bei der Kodierung kann das sogenannte Schwellenkodierverfahren angewandt werden, das nur solche Spektralkoeffizienten kodiert und überträgt, deren Betrag oberhalb einer vorgegebenen Schwelle liegt. Der Vorteil dieses Verfahrens liegt darin, daß die unterschiedliche subjektive Empfindlichkeit für die Basisbilder in die Optimierung des Koders einbezogen werden kann.

Zu diesem Zweck werden die Bilddaten im Originalbereich von einem Klassifizierer 16 ausgewertet und gegebenenfalls nach Einbeziehung des Spektralbereiches in verschiedene Klassen eingeteilt, die der lokalen Bildstruktur Rechnung tragen.

Eine derartige Klasseneinteilung ist in Fig. 4 wiedergegeben. Handelt es sich um sehr detailarme Bildstrukturen, so wird die Klasse a zugewiesen. Bei einer Bildstruktur, die in Y-Richtung mehr Details zeigt, wird die Klasse b oder e zugewiesen. Ist der Detailreichtum sowohl in Y-Richtung wie in X-Richtung vorhanden, so erfolgt die Zuweisung der Klasse c. Auf diese Weise wird erreicht, daß die Hauptrichtung der Strukturen berücksichtigt wird. Entsprechend wird bei einer noch höher angestrebten Auflösung eine weitere Aufteilung der Klassen vorgenommen, die davon abhängt, welche Vorzugsrichtung und welches Maß die Struktur einnimmt.

Der Klassifizierer 16 steuert nun entsprechend der vorgenommenen Klassifizierung der Bilddaten den Koder 12 so an, daß der die höchste subjektive Wiedergabetreue sichernde Kode zur Kodierung herangezogen wird. Entsprechend der aufgrund der lokalen Bildstruktur zugewiesenen Klasse ist der Datenumfang der kodierten Bilddatenblöcke unterschiedlich.

Zur Anpassung dieses diskontinuierlichen Datenstroms an einen für die Übertragung benötigten konstanten Datenstrom werden die kodierten Daten in einen Pufferspeicher 14 eingelesen und von dort seriell über einen Ausgang 28 einer Übertragungsstrecke zugeführt. Unter normalen Umständen gleicht der Pufferspeicher 14 den schwankenden Datenzufluß aus. Besitzt das Bild jedoch sehr detailreiche Bildstrukturen, so kann es auch zu einem Überlaufen des Pufferspeichers 14 kommen.

In Fig. 2 ist der Pufferspeicher 14 gesondert herausgezeichnet und mit Marken 36, 38 und 40 versehen, die bestimmte Speicherzustände symbolisieren sollen. Die Marke 36 zeigt einen stationären Zustand an, der sich bei gleichem zufließenden und abfließenden Datenstrom unter normalen Umständen einstellt. Die Marken 38 symbolisieren kritische Zustände, die bereits Gegenmaßnahmen zur Verminderung des Datenzustroms erfordern. Schließlich zeigt noch die Marke 40 einen Zustand an, bei der unmittelbar der Überlauf des Pufferspeichers 14, verbunden mit erheblichen Bildstörungen, droht.

Um einen Überlauf des Pufferspeichers 14 zu verhindern, wird bei Erreichen des durch die Marke 38 symbolisierten Speicherzustands eine Reduzierung des Datenumfangs des zuströmenden Datenstroms durchgeführt. Dies geschieht über eine Rückführung 18, mittels der eine aus dem Umfang der zwischengespeicherten Daten abgeleitete Regelgröße dem Kodierer 12 zugeführt wird.

In der Rückführung 18 befindet sich eine Pufferspeicheraktivitätseinheit, die den Speicherzustand des Pufferspeichers 14 überwacht. Von der Pufferspeicheraktivitätseinheit 20 führt eine Steuerleitung 42 zum Klassifizierer, in Weiterbildung dieser Ausgestaltung eine weitere Steuerleitung 44 zu einem Klassifikationsspeicher 24 und schließlich als abgewandelte Ausführung, eine Steuerleitung 22 direkt zum Kodierer 12.

Erreicht der Pufferspeicher 14 durch einen erhöhten Datenzustrom einen Ladezustand, der an eine der Marken 38 heranreicht, so wird der Klassifizierer 16 veranlaßt, gegebenenfalls eine niedrigere Klasse zuzuweisen, als den Bilddaten im Originalbereich, wie sie über den Eingang 26 zugeführt werden, entsprechen würde. Angenommen, der Klassifizierer 16 würde einem Bilddatenblock die Klasse 1 zuweisen, so wird er durch das über die Steuerleitung 42 zugeführte Signal veranlaßt, die Klasse g zuzuweisen. Würde er in einem anderen Beispiel einem Bilddatenblock die Klasse f zuweisen, so würde ihn die Pufferspeicheraktivitätseinheit 20 veranlassen, die Klasse c zuzuweisen.

Bei dem Übergang der Klassen h, i, j, k, l und m auf die entsprechend niedrigeren Klassen e, f, g wird eine hohe Reduktion des Datenumfangs erreicht. Bei dem Übergang der Klasse e zur Klasse b oder gar von der Klasse b zur Klasse a ist dagegen die Datenreduktion geringer. In diesem Fall hängt es von dem Zustand des Pufferspeichers 14 ab, ob noch eine nächstniedrigere Klasse ausgewählt werden soll. Vorzugsweise wird jeweils nur eine Veränderung um eine Klasse vorgenommen, wobei die Strukturausrichtung beibehalten wird.

Die Klassen sind so definiert, daß der Übergang von einer zur anderen Klasse aufgrund einer Strukturänderung im Gesamtbild subjektiv nicht störend bemerkt wird. Aufgrund dieser Überlegung wird auch die zwangsweise Veränderung der Zuweisung einer der Klassen zu den Bilddatenblöcken aufgrund des Speicherzustands subjektiv als nicht störend empfunden. Dies ist besonders beim Übergang der höheren Klassen zu den mittleren Klassen der Fall. Es werden dann zwar weniger Strukturen aufgelöst, diese können aber mit einem geringeren Fehler rekonstruiert werden.

Während die ausschließliche Ausgestaltung der Rückführung 18 durch die Verbindung der Pufferspeicheraktivitätseinheit 20 mit dem Klassifizierer 16 über die Steuerleitung 42 bereits eine hohe Sicherheit gegen ein Überlaufen des Pufferspeichers 14 bietet, kann ergänzend auch eine direkte Rückführung mittels der Steuerleitung 22 vorgesehen sein. Diese an sich bekannte Rückführung führt zu einer Verminderung der Quantisierungsauflösung bei drohendem Speicherüberlauf, was zu einer Verschlechterung des subjektiven Bildeindrucks bei den davon betroffenen Bilddatenblöcken führt. Diese Maßnahme könnte als zusätzliche Sicherheit gegen ein Überlaufen des Pufferspeichers 14 dienen, wenn die Charakteristik der Einflußnahme über den Klassifizierer 16 einen zu geringen Regelumfang besitzt.

Die Schaltungsanordnung ist auch in der Lage, bei einem zu geringen Datenzufluß die Auflösung der Bilddatenblöcke zu erhöhen und so zu einer Konstanthaltung des Datenflusses und einer optimalen Ausnutzung des Übertragungsweges beizutragen. Wird einem Bilddatenblock einer sehr detailarmen Vorlage z.B. die Klasse b zugeordnet, und ist der Ladezustand des Pufferspeichers 14 unterhalb der Marke 36, so veranlaßt die Pufferspeicheraktivitätseinheit 20 den Klassifizierer 16 dem entsprechenden Bilddatenblock eine höhere Klasse, in diesem Falle e, zuzuweisen. War bereits die Klasse e aufgrund der lokalen Bildstruktur ausgewählt worden, so kann je nach der Hauptausrichtung der Struktur statt dessen die Klasse h oder die Klasse i zugewiesen werden.

Die Pufferspeicheraktivitätseinheit 20 ist vorzugsweise so ausgebildet, daß sie das gesamte Datenvolumen eines gegenwärtigen Bildes zur Abschätzung des Datenvolumens eines folgenden Bildes heranzieht. Dementsprechend kann die Steuerung des Klassifizierers 16 von dem gesamten Datenvolumen anstatt von dem momentanen gesteuert werden. So lassen sich die Zuweisungen anderer Klassen vermeiden, wenn erkennbar ist, daß eine folgende durch den Bildinhalt veranlaßte Abnahme des Datenstroms ohne Regelungsmaßnahmen zu einer Abnahme des Speicherzustands führen würde.

In Weiterbildung der Erfindung werden die Klassen der Intensität der subjektiven Wahrnehmung eines Bildes angepaßt. Damit wird der Umstand berücksichtigt, daß das Auge in der Bildmitte feinere Strukturen wahrnimmt als an den Bildrändern. Dementsprechend werden gegebenenfalls den Randbereichen Klassen niedrigerer und der Bildmitte Klassen höherer Ortsauflösungen zugewiesen. Dadurch wird eine weitere Verbesserung des subjektiven Bildeindrucks bei gleicher Datenrate erzielt. Zur besseren Realisierung wird die Information der Klassifizierung des gegenwärtigen Bildes in einem Klassifikationsspeicher 24 zwischengespeichert und beim nachfolgenden Bild berücksichtigt. Der Erfolg dieser Maßnahme beruht darauf, daß sich die einzelnen Bilddatenblöcke von einem zum anderen Gesamtbild nicht grundlegend ändern und so die Klassenzuweisung der Bilddatenblöcke für das folgende Bild als Richtwert dienen kann.

## Patentansprüche

1. Verfahren zur Reduktion der Datenrate digitalisierter Bilder, deren Bilddaten zunächst blockweise transformiert, anschließend kodiert und schließlich vor ihrer Ausgabe zwischengespeichert werden, wobei ein Klassifizierer für jeden Bilddatenblock aufgrund der Bildstatistik des Bilddatenblockes in bezug auf den Detailreichtum und/oder die Ausrichtung seiner Strukturen/Details im Originalbild eine Klasse aus einer Auswahl vorgegebener Klassen ermittelt und die Bilddatenblöcke entsprechend der ermittelten Klassen unterschiedlich kodiert werden, wobei aus dem Datenumfang der im Pufferspeicher zwischengespeicherten Daten eine Regelgröße abgeleitet wird, dadurch gekennzeichnet, daß in Abhängigkeit der Regelgröße eine andere Klasse als die, die der Bildstatistik entspricht, dem Bilddatenblock zugewiesen wird, so daß bei hohen Datenmengen im Pufferspeicher (14) bei der Kodierung weniger Daten erzeugt werden und bei geringen Datenmengen im Pufferspeicher (14) bei der Kodierung mehr Daten erzeugt werden als unter Verwendung der Klasse, die der Bildstatistik entspricht.

2. Verfahren nach Anspruch 1, dadurch gekennzeichnet, daß ausschließlich die Zuweisung der Klassen zu den Bilddatenblöcken verändert wird.

3. Verfahren nach Anspruch 1, dadurch gekennzeichnet, daß zusätzlich zu einer an sich bekannten Veränderung der Quantisierungsauflösung bei der Kodierung der Bilddatenblöcke die Zuweisung der Klassen zu den Bilddatenblöcken verändert wird.

4. Verfahren nach einem der Ansprüche 1 - 3, dadurch gekennzeichnet, daß die veränderte Zuweisung der Klassen auf eine der jeweils benachbarten Klassen höherer oder niedrigerer Auflösung beschränkt ist.

5. Verfahren nach einem der Ansprüche 1 - 4, dadurch gekennzeichnet, daß aus dem Datenumfang aller Bilddatenblöcke eines gegenwärtigen Gesamtbildes die Regelgröße für die Zuweisung der Klassen zu den Bilddatenblöcken des folgenden Gesamtbildes gewonnen wird.

6. Verfahren nach einem der Ansprüche 1 - 5, dadurch gekennzeichnet, daß den Bildrändern des Gesamtbildes zugeordnete Bilddatenblöcke im Datenumfang reduziert kodiert werden.

7. Verfahren nach Anspruch 6, dadurch gekennzeichnet, daß den den Bildrändern zugeordneten Bilddatenblöcken niedrigere Klassen zugewiesen werden als den der Bildmitte zugewiesenen Bilddatenblöcken.

8. Verfahren nach Anspruch 7, dadurch gekennzeichnet, daß die Klassifikationsfaktoren der Bilddatenblöcke eines gegenwärtigen Gesamtbildes zwischengespeichert und bei der Zuweisung der Klassen zu den Bilddatenblöcken des folgenden Gesamtbildes berücksichtigt werden.

9. Schaltungsanordnung zur Reduktion der Datenrate digitalisierter Bilder, bestehend aus einer Transformationsschaltung (10) zur blockweisen Transformation von Bilddaten, einem nachgeschalteten Kodierer (12), einem anschließenden Pufferspeicher (14), einem Klassifizierer (16), der aus den der Tranformationsschaltung (10) zugeführten Bilddaten und unter Verarbeitung der von der Transformationsschaltung (10) übermittelten Spektralbereiche jeden Bilddatenblock entsprechend der eigenen Bildstatistik einer Klasse zuordnet und dem Kodierer (12) einen klassenspezifischen Kode vorgibt, und aus einer Rückführung (18) vom Pufferspeicher (14) zum Kodierer (12), dadurch gekennzeichnet,
daß die Rückführung (18) über eine Pufferspeicheraktivitätseinheit (20) zur Gewinnung einer Regelgröße aus den im Pufferspeicher (14) zwischengespeicherten Daten zum Klassifizierer (16) geführt ist, der in Abhängigkeit der Regelgröße die Zuweisung der Klassen zu den Bilddatenblöcken verändert.

10. Schaltungsanordnung nach Anspruch 9, dadurch gekennzeichnet, daß die Rückführung (18) ausschließlich über den Klassifizierer (16) führt.

11. Schaltungsanordnung nach Anspruch 9, dadurch gekennzeichnet, daß die Rückführung (18) zusätzlich zu einer an sich bekannten direkten Rückführung (22) zum Kodierer (12) zur Veränderung der Quantisierungsauflösung bei der Kodierung der Bilddatenblöcke zum Klassifizierer (16) führt.

12. Schaltungsanordnung nach einem der Ansprüche 9 - 11, dadurch gekennzeichnet, daß die Rückführung (18) direkt und zusätzlich über einen Klassifikationsspeicher (24), der die Klassifikationsfaktoren aller Bilddatenblöcke eines gegenwärtigen Gesamtbildes speichert, zum Klassifizierer führt.

## Claims

1. Method for reducing the data rate of digitised images, the image data of which are first transformed block by block, subsequently coded and finally stored temporarily before they are output, a classifier determining a class from a selection of predetermined classes for each image data block on the basis of the image statistics of the image data block with reference to the definition and/or the alignment of its structures/details in the original image and the image data blocks being coded differently according to the classes determined, a control variable being derived from the data extent of the data temporarily stored in the buffer memory, characterised in that the image data block is assigned, depending on the control variable, a class other than the class corresponding to the image statistics, with the result that when coding with high data rates in the buffer memory (14) less data are produced, and when coding with low data rates in the buffer memory (14) more data are produced than when the class corresponding to the image statistics is used.

2. Method according to Claim 1, characterised in that only the assignment of the classes to the image data blocks is changed.

3. Method according to Claim 1, characterised in that in addition to a change, known per se, of the quantisation resolution during the coding of the image data blocks, the assignment of the classes to the image data blocks is changed.

4. Method according to one of Claims 1 - 3, characterised in that the changed assignment of the classes is restricted to one of the respective adjacent classes of higher or lower resolution.

5. Method according to one of Claims 1 - 4, characterised in that the control variable for the assignment of the classes to the image data blocks of the following total image is obtained from the data extent of all image data blocks of a current total image.

6. Method according to one of Claims 1 - 5, characterised in that image data blocks associated with the image margins of the total image are coded so as to reduce the data extent.

7. Method according to Claim 6, characterised in that the image data blocks associated with the image margins are assigned lower classes than the image data blocks assigned to the centre of the image.

8. Method according to Claim 7, characterised in that the classification factors of the image data blocks of a current total image are temporarily stored and are taken into account when assigning the classes to the image data blocks of the following total image.

9. Circuit arrangement for reducing the data rate of digitised images, comprising a transformer circuit (10) for transforming image data block by block, a subsequent coder (12), a connected buffer memory (14), a classifier (16) which, from the image data supplied to the transformer circuit (10) and on processing the spectral ranges transmitted by the transformer circuit (10), assigns each image data block to a class according to its own image statistics and specifies in advance a class-specific code for the coder (12), and a feedback (18) from the buffer memory (14) to the coder (12), characterised in that the feedback (18) is led via a buffer memory activity unit (20) for obtaining a control variable from the data temporarily stored in the buffer memory (14) to the classifier (16), which changes the assignment of the classes to the image data blocks depending on the control variable.

10. Circuit arrangement according to Claim 9, characterised in that the feedback (18) leads only via the classifier (16).

11. Circuit arrangement according to Claim 9, characterised in that, in addition to a direct feedback (22), known per se, to the coder (12), the feedback (18) leads to the classifier (16) for changeing the quantisation resolution during coding of the image data blocks.

12. Circuit arrangement according to one of Claims 9 - 11, characterised in that the feedback (18) leads directly and additionally via a classification memory (24), which stores the classification factors of all image data blocks of a current total image, to the classifier.

## Revendications

1. Procédé de réduction du taux de données d'images numérisées, dont les données d'images sont tout d'abord transformées par blocs puis sont codées et, enfin, sont enregistrées de manière intermédiaire avant leur émission, un moyen de classement déterminant pour chaque bloc de données d'images et partant de la statistique d'image du bloc de données d'images relative à la richesse de détails et/à l'alignement de ses structures/détails dans l'image d'origine, une classe choisie parmi des classes prédéterminées et les blocs de données d'images sont codés différemment en fonction de classes obtenues, et partant du volume des données enregistrées de façon intermédiaire dans la mémoire tampon, on déduit une grandeur de réglage, procédé caractérisé en ce qu'en fonction de la grandeur de réglage on attribue au bloc de données d'images une classe autre que celle qui correspond à la statistique de l'image, de façon que pour des volumes importants de données dans la mémoire tampon 14, le codage engendre moins de données et que pour des volumes de données plus faibles dans la mémoire tampon 14, le codage génère plus de données que si l'on utilisait la classe selon la statistique de l'image.

2. Procédé selon la revendication 1, caractérisé en ce que l'on modifie exclusivement l'attribution des classes aux blocs de données d'images.

3. Procédé selon la revendication 1, caractérisé en ce qu'en plus d'une modification connue de la résolution de quantification, lors du codage des blocs de données d'images, on modifie l'attribution des classes aux blocs de données d'images.

4. Procédé selon l'une des revendications 1 à 3, caractérisé en ce que le changement d'attribution des classes est limité chaque fois à la classe voisine correspondant à une résolution plus élevée ou plus faible.

5. Procédé selon l'une des revendications 1 à 4, caractérisé en ce que partant du volume des données de tous les blocs de données d'images d'une image d'ensemble, instantanée, on forme la grandeur de régulation pour l'attribution des classes aux blocs de données d'images pour l'image d'ensemble suivante.

6. Procédé selon l'une des revendications 1-5, caractérisé en ce que les blocs de données d'images, associés aux bords de l'image d'ensemble, sont codés de manière réduite dans le volume des données.

7. Procédé selon la revendication 6, caractérisé en ce qu'on attribue aux blocs de données, correspondant aux bords de l'image, des classes inférieures à celles attribuées aux blocs des données d'images du milieu de l'image.

8. Procédé selon la revendication 7, caractérisé en ce qu'on enregistre de façon intermédiaire les coefficients de classement des blocs de données d'une image d'ensemble, instantanée, et on en tient compte pour l'attribution des classes aux blocs de données d'images de l'image d'ensemble suivante.

9. Circuit pour réduire le taux de données d'images numérisées, comprenant un circuit de transformation (10) pour transformer des données d'images par blocs, avec en aval un moyen de codage (12), suivi d'une mémoire tampon (14), d'un moyen de classement (16) qui attribue aux données d'images fournies par le circuit de transformation (10), et en traitant la plage de spectre transmise par le circuit de transformation (10), a chaque bloc de données d'images, une classe en fonction de la statistique d'image, propre, et on fixe préalablement au moyen de codage (12) un code spécifique de classe et, à partir du retour (18) de la mémoire tampon (14) vers le moyen de codage (12), circuit caractérisé en ce que le retour (12) passe par une unité d'activité de mémoire tampon (20) pour obtenir une grandeur de réglage à partir des données enregistrées de façon intermédiaire dans la mémoire tampon (14) vers le moyen de classement (16) qui, en fonction des grandeurs de réglage, modifie l'attribution des classes aux blocs de données d'images.

10. Circuit selon la revendication 9, caractérisé en ce que le retour (18) passe exclusivement par le moyen de classement (16).

11. Circuit selon la revendication 9, caractérisé en ce que le retour (18) conduit, en plus d'un retour direct (22) connu en soi, vers le codeur (12) pour modifier la résolution de quantification lors du codage des blocs de données d'images, vers le moyen de classement (16).

12. Circuit selon l'une des revendications 9 à 11, caractérisé en ce que le retour (18) se fait directement et en plus par l'intermédiaire d'une mémoire de classement (24) qui contient les coefficients de classement de tous les blocs de données d'images d'une image d'ensemble, instantanée, pour aller vers le moyen de classement.
